# EUROPÄISCHE PATENTANMELDUNG

(11) **EP 4 015 876 A1**
(43) Veröffentlichungstag der Anmeldung: **22.06.2022**
(21) Anmeldenummer: 20465602.9
(22) Anmeldetag: 17.12.2020
(51) Int. Cl.: F16H 57/032

(54) **FAHRZEUG-MECHANIKSYSTEM**

(71) Anmelder: Vitesco Technologies Germany GmbH, 93055 Regensburg (DE)
(72) Erfinder: Farago-Boian, Andrei, 81737 München (DE); Lazar, Dalin, 81737 München (DE); Hardaut, Sorin Catalin, 81737 München (DE)
(74) Vertreter: Vitesco Technologies

(57) **Zusammenfassung**

Die Erfindung betrifft ein Fahrzeug-Mechaniksystem (200), das bewegliche und unbewegliche mechanische Komponenten, elektrische Komponenten, und ein Plastikgehäuse (302, 310), das die elektrischen Komponenten und die mechanischen Komponenten umschließt, aufweist. Die elektrischen Komponenten sind eingerichtet, die beweglichen mechanischen Komponenten zu bewegen. Eine der beweglichen Komponenten ist eine ausgehende Welle (202), die aus dem Plastikgehäuse hervortritt, und die eingerichtet ist, in mechanische Wechselwirkung mit einer Schnittstellenwelle (206) eines externen Anwendungssystems (210) zu treten und eine elektrische Verbindung mit dem Anwendungssystem herzustellen.

## Beschreibung

### Technisches Gebiet

Die Erfindung betrifft ein Fahrzeug-Mechaniksystem, eine Verwendung eines Montageblechs in einem Fahrzeug-Mechaniksystem, eine Verwendung einer aus einem Gehäuse austretenden Welle eines Fahrzeug-Mechaniksystems, eine Verbindungsanordnung, eingerichtet zum elektrischen Verbinden eines Fahrzeug-Mechaniksystems mit einem Plastikgehäuse, sowie ein Fahrzeug.

### Stand der Technik

Die überwiegende Mehrheit der Automobilprodukte wie Steuergeräte, Betätigungseinheiten, Regler usw., wird aus Sicherheitsgründen elektrisch mit der elektrischen Masse des Fahrzeugs (in dieser Offenbarung als GND oder auch als Erdung bezeichnet) verbunden. Diese Anforderung zu realisieren, ist meist recht einfach, wenn die oben genannten Produkte metallische Gehäuse haben und durch ihre Gehäuse die elektrische Verbindung mit dem GND realisiert wird.

### Offenbarung der Erfindung

Es ist wünschenswert, ein Produkt, das kein Metallgehäuse aufweist zu verbessern.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Die beschriebenen Ausführungsformen betreffen in ähnlicher Weise das Fahrzeug-Mechaniksystem, die Verwendung des Montageblechs in einem Fahrzeug-Mechaniksystem, die Verwendung der aus einem Gehäuse austretenden Welle eines Fahrzeug-Mechaniksystems, die Verbindungsanordnung, sowie das Fahrzeug. Synergieeffekte können sich aus verschiedenen Kombinationen der Ausführungsformen ergeben, obwohl sie möglicherweise nicht im Detail beschrieben werden.

Gemäß einem ersten Aspekt wird ein Fahrzeug-Mechaniksystem bereitgestellt, das bewegliche und unbewegliche mechanische Komponenten, elektrische Komponenten, und ein Plastikgehäuse, das die elektrischen Komponenten und die mechanischen Komponenten umschließt, aufweist. Die elektrischen Komponenten sind eingerichtet, die beweglichen mechanischen Komponenten zu bewegen. Eine der beweglichen Komponenten ist eine ausgehende Welle, die aus dem Plastikgehäuse hervortritt, und die eingerichtet ist, in mechanische Wechselwirkung mit einer Schnittstellenwelle eines externen Anwendungssystems zu treten und eine elektrische Verbindung mit dem Anwendungssystem herzustellen.

Der Begriff "Plastik" steht hier stellvertretend für ein Gehäuse aus nicht-leitendem Material.
Der Begriff "Fahrzeug-Mechaniksystem" schließt nicht aus, dass sich darin elektrische und elektronische Komponenten befinden können.

Gemäß einer Ausführungsform ist die ausgehende Welle eingerichtet, durch den elektrischen Kontakt eine Verbindung zur elektrischen Masse des Fahrzeugs herzustellen.

Das Fahrzeug-Mechaniksystem ist beispielsweise ein separat herstellbares Modul, das z.B. mit einer mechanischen Einrichtung eines Fahrzeugs, wie z.B. ein Getriebe, hier allgemein als Anwendungssystem bezeichnet, verbunden wird, und so beispielsweise eine mechanische Wechselwirkung, d.h. beispielweise eine Kraftübertragung bewirkt. Diese Verbindung wird gemäß der Zweckbestimmung des Fahrzeug-Mechaniksystems mechanisch durch die austretende Welle hergestellt. Da das System jedoch auch mechanisch bewegliche Komponenten aufweist, die durch elektrische Komponenten bewegt werden, müssen oder sollen die Komponenten elektrisch geerdet werden. Wäre das Gehäuse ein Metallgehäuse, könnte die Erdung über dieses Gehäuse erfolgen, das in einfacher Weise mit der Fahrzeugmasse verbunden werden kann. Dies ist jedoch mit einem Plastikgehäuse nicht möglich. Einen Ausweg stellt die hier vorgestellte Verbindung über die ausgehende Welle dar. Hierfür muss die Welle wie auch die Schnittstellenwelle des Anwendungssystems zumindest eine metallische Oberfläche aufweisen. Die Erdung erfolgt dadurch, dass die kontaktierte Schnittstellenwelle des Anwendungssystems elektrisch auf Fahrzeugmasse liegt, und weiterhin dadurch, dass innerhalb des Fahrzeug-Mechaniksystems Verbindungen bestehen, die die zu erdenden Komponenten mit der Fahrzeugmasse verbinden.

Gemäß einer Ausführungsform ist zumindest ein Teil der beweglichen, mechanischen Komponenten metallisch, und zumindest dieser Teil ist elektrisch mit der ausgehenden Welle verbunden. Das heißt, die metallischen, beweglichen Teile sind zum einen geerdet, und zum anderen können sie als elektrische Leiter dienen, um sich gegenseitig elektrisch zu verbinden und/oder sich mit elektrischen Komponenten elektrisch zu verbinden.

Gemäß einer Ausführungsform ist die ausgehende Welle mit weiteren elektrischen Komponenten elektrisch verbunden ist. Analog zu den mechanischen Komponenten können auch die elektrischen Komponenten, bevorzugt alle elektrischen Komponenten, durch eine direkte oder indirekte Verbindung zur ausgehenden Welle geerdet werden.

Gemäß einer Ausführungsform weist das Fahrzeug-Mechaniksystem ein Montageblech, das dafür geeignet ist, auf, dass elektrische und elektrisch leitende mechanische Komponenten daran befestigt werden können, wobei das Montageblech elektrisch mit der ausgehenden Welle verbunden ist. An dem Montageblech können auch weitere Bauteile und Komponenten befestigt werden. Neben der mechanischen Befestigung der Komponenten dient das Montageblech somit insbesondere sozusagen als Verteiler der elektrischen Fahrzeugmasse. Es können also sowohl Komponenten direkt an diese Masse angeschlossen werden oder z.B. mechanische Bauteile wie beispielsweise, Hülsen oder Wellenlager, die als Leiter dienen.

Gemäß einer Ausführungsform weist das Fahrzeug-Mechaniksystem als mechanische Komponenten ein Schneckengetriebe und/oder ein Stirnradgetriebe auf. Das Fahrzeug-Mechaniksystem kann alternativ oder zusätzlich weitere Getriebearten, angetriebene Räder oder Zahnräder oder sonstige mechanisch bewegliche Metallteile aufweisen.

Gemäß einer Ausführungsform sind die elektrisch leitenden, mechanischen Komponenten Wellenlager und/oder Schrauben. Das heißt, neben den vorgenannten beweglichen Komponenten können Wellenlager und/oder Schrauben als statische Komponenten als elektrische Leiter dienen. Dem Fachmann ist bekannt, dass auf einen ausreichenden Kontakt geachtet werden muss und wie dies zu bewerkstelligen ist. Beispielsweise können bei Schrauben metallische Ringe für einen elektrischen Kontakt sorgen.

Gemäß einer Ausführungsform sind die elektrischen Komponenten ein Gleichstrommotor und / oder eine Leiterplatte. Der Gleichstrommotor ist beispielsweise eingerichtet, die Wellen und damit beispielsweise auch die Getriebe anzutreiben, während die Leiterplatte Schaltkreise z.B. für die Stromversorgung und für die Steuerung aufweist. Die Leiterplatte kann zum Beispiel mit Schrauben auf das Montageblech montiert werden. Auf die Leiterplatte können beidseitig metallische Ringe aufgebracht sein und sie kann durchkontaktiert sein, sodass auf beiden Seiten der Leiterplatte die elektrische Fahrzeugmasse verfügbar ist und der Kontakt zu den Schrauben und zum Montageblech sichergestellt werden kann.

Gemäß einer Ausführungsform bilden die elektrischen und / oder mechanischen Komponenten eine Kette, über die sie mit dem Montageblech elektrisch verbunden sind. Hierdurch sind indirekte Verbindungslinien möglich, so dass kein direkter Kontakt oder quasi-direkter Kontakt über Wellenlager oder Schrauben notwendig ist.

Gemäß einer Ausführungsform ist das Fahrzeug-Mechaniksystem ein Stellglied, beispielsweise für ein Getriebe als Anwendungssystem, ein Steuergerät, eine Betätigungseinheit oder ein Regler.

Gemäß einem Aspekt wird eine Verwendung eines Montageblechs in einem Fahrzeug-Mechaniksystem mit einem Plastikgehäuse zur Verbindung elektrischer und mechanischer Komponenten des Fahrzeug-Mechaniksystems mit einer elektrischen Fahrzeugmasse bereitgestellt.

Gemäß einem weiteren Aspekt wird eine Verwendung einer aus einem Gehäuse, z.B. einem Plastikgehäuse, austretenden bzw. herausragenden oder ausgehenden mechanischen Welle eines Fahrzeug-Mechaniksystems zur Verbindung elektrischer und mechanischer Komponenten des Fahrzeug-Mechaniksystems mit einer elektrischen Fahrzeugmasse bereitgestellt.

Gemäß einem weiteren Aspekt wird eine Verbindungsanordnung bereitgestellt, die zum elektrischen Verbinden eines hierin beschriebenen Fahrzeug-Mechaniksystems, das ein Plastikgehäuse aufweist, mit einem Anwendungssystem eingerichtet ist, wobei das Fahrzeug-Mechaniksystem eine elektrisch leitende ausgehende mechanische Welle aufweist und das Anwendungssystem eine elektrisch leitende Schnittstellenwelle aufweist. Hierbei sind die Welle des Fahrzeug-Mechaniksystems und die Schnittstellenwelle des Anwendungssystems eingerichtet, mechanisch so miteinander verbunden zu werden, dass ein elektrischer Kontakt entsteht.

Gemäß einem weiteren Aspekt wird ein Fahrzeug bereitgestellt, das ein solches Fahrzeug-Mechaniksystem aufweist.

Die Erfindung gibt somit eine technische Lösung an, wie Fahrzeug-Mechaniksysteme, die ein nicht leitendes Gehäuse haben aber mit dem Fahrzeug-GND verbunden werden sollen, solch eine Verbindung herstellen können.

Andere Variationen der offenbarten Ausführungsformen können vom Fachmann bei der Durchführung der beanspruchten Erfindung durch das Studium der Zeichnungen, der Offenbarung und der beigefügten Ansprüche verstanden und ausgeführt werden. In den Ansprüchen schließt das Wort "umfassend" andere Elemente oder Schritte nicht aus, und der unbestimmte Artikel "ein" oder "eine" schließt eine Vielzahl nicht aus. Die bloße Tatsache, dass bestimmte Maßnahmen in voneinander abhängigen Ansprüchen angegeben sind, bedeutet nicht, dass eine Kombination dieser Maßnahmen nicht vorteilhaft genutzt werden kann. Bezugszeichen in den Ansprüchen sollten nicht so ausgelegt werden, dass sie den Umfang der Ansprüche begrenzen.

### Kurze Beschreibung der Figuren

Im Folgenden werden Ausführungsbeispiele der Erfindung anhand der schematischen Zeichnungen näher erläutert. Hierbei zeigt
- Fig. 1a: eine schematische Zeichnung einer sog. Stapel- oder Stack-up-Verbindung,
- Fig. 1b: eine schematische Zeichnung einer Verbindung durch geschweißte Erdung,
- Fig. 2: eine schematische Zeichnung einer Anordnung eines Fahrzeug-Mechaniksystems und einem damit verbundenen Anwendungssystem,
- Fig. 3: eine schematische Zeichnung eines Fahrzeug-Mechaniksystems,
- Fig. 4a: eine schematische Zeichnung zusammengebauter Komponenten eines Fahrzeug-Mechaniksystems,
- Fig. 4b: in einer schematischen Explosionszeichnung die Komponenten des Fahrzeug- Mechaniksystems,
- Fig. 5: ein Blockdiagramm der Komponenten der Anordnung eines Fahrzeug-Mechaniksystems und einem damit verbundenen Anwendungssystem und deren Erdungs-Verbindungspfade,
- Fig. 6: eine schematische Zeichnung eines Fahrzeugs mit einem solchen Fahrzeug- Mechaniksystem.

### Ausführungsformen

Einander entsprechende Teile sind in allen Figuren mit den gleichen Bezugszeichen versehen.

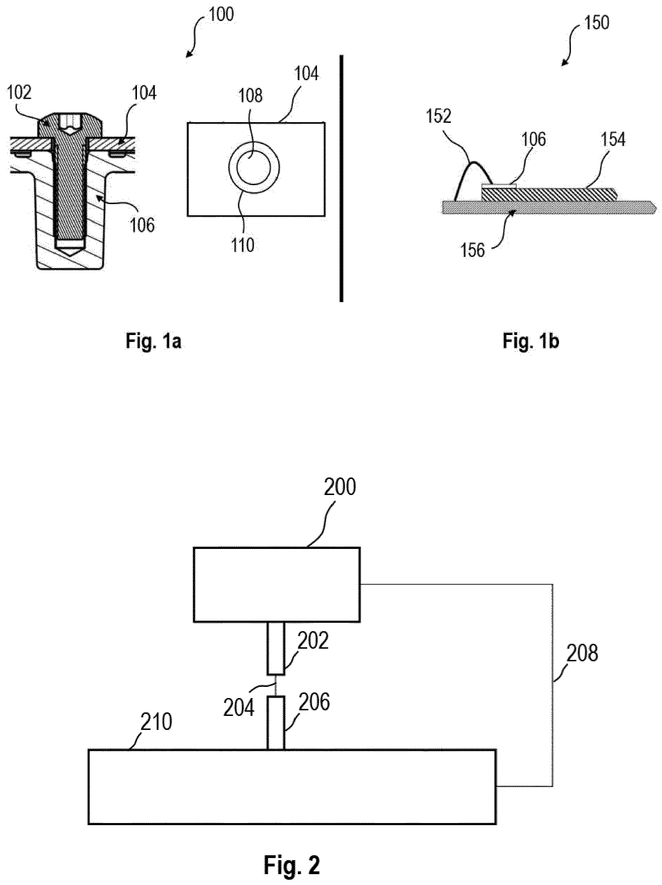

Die Beispiele in Fig. 1a und 1b zeigen, wie eine Erdung, d.h. eine Verbindung mit GND des Fahrzeugs, mit metallischen Gehäusen 106, 156 hergestellt werden kann. In einer in Fig. 1a gezeigten sog. Stack-up-Lösung wird die Leiterplatte 104 (PCB) mit dem metallischen Druckgussgehäuse 106 in Kontakt gebracht. Der kontinuierliche Kontakt wird dann durch z.B. durch eine selbstschneidende Schraube 102 sichergestellt. Hierbei sind unter der Schraube 102 zwei metallisierte Ringe 108, 110 auf beiden Seiten der Leiterplatte 104 erforderlich. Eine weitere in Fig. 1b gezeigte Lösung kann durch eine geschweißte Blei-Erdung erreicht werden. Hierbei wird die Leiterplatte 154 auf dem Druckgussgehäuse 156 platziert, ohne direkten elektrischen Kontakt. Der elektrische Kontakt wird durch mindestens eine metallische Leitung 152, die mit einem metallisierten PCB-Anschluss 158 und dem Gehäuse 156 verschweißt wird, hergestellt. Andere Lösungen, die nicht dargestellt werden, implizieren die Verwendung von an den Leiterplattenoberflächen montierten Metallfedern, die gegen das Metallgehäuse drücken oder durch einen elektrisch leitfähigen Klebstoff.

Fig. 2 zeigt eine schematische Zeichnung einer Anordnung 220 eines Fahrzeug-Mechaniksystems 200 und einem damit über eine Geometrie 204 verbundenen Anwendungssystem 210. Die Linie 208 stellt funktional eine mechanische Befestigung dar.

Im Falle einiger Aktuatoren von Fahrzeug-Mechaniksystemen, die in elektrisch nicht-leitenden Gehäusen gekapselt sind und mechanisch an einem Anwendungssystem 210, z.B. an einem metallisches Getriebegehäuse befestigt werden müssen, kann die Verbindung zur elektrischen Fahrzeugmasse durch eine aus dem Fahrzeug-Mechaniksystem 200 austretende metallische Welle 202 hergestellt werden, die mit einer zum Anwendungssystem 210 gehörenden metallischen Schnittstellenwelle 206 verbunden wird, so dass der mechanische Kontakt 208 zwischen den zwei metallischen Teilen an sich eine elektrische Kontaktmöglichkeit darstellt.

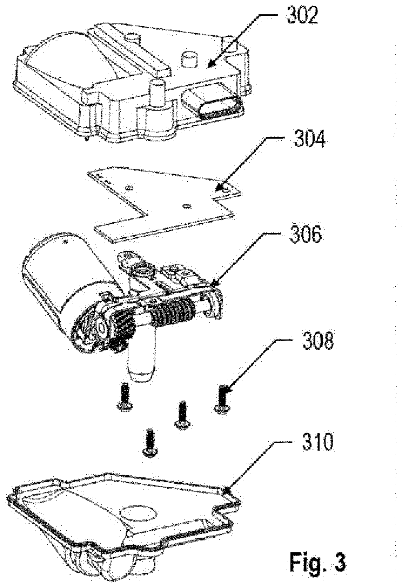

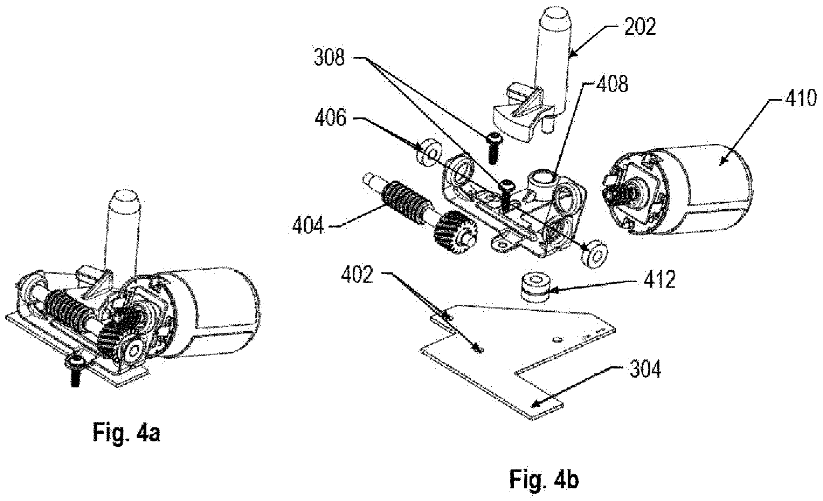

Fig. 3 zeigt in einer schematischen Zeichnung ein Beispiel eines Stellglied als Fahrzeug-Mechaniksystem 200, das an das Übertragungssystem 210, z.B. ein Differential, Getriebe, Verteilergetriebe, Reduktionsgetriebe, usw., angeschlossen ist. Das Stellglied 200 besteht hauptsächlich aus einem Kunststoffgehäuse 302, einer Leiterplatte 304, einer Mechanikbaugruppe 306 mit Motor und Getriebesatz, einer Befestigung sowie Erdungsschrauben 308 und einer Kunststoffabdeckung 310. In diesem Fall, der im Hinblick darauf, welche Komponenten mit dem Fahrzeug-GND verbunden werden sollen, als allgemein betrachtet werden kann, müssen die Leiterplatte 304 und der Gleichstrommotor (DC-Motor) 410 zwingend mit dem Fahrzeug-GND verbunden werden. Diese Verbindung wird über ein Montageblech 408 bzw. einen Mechanismusträger oder Metallträger wie in Fig. 4a, 4b gezeigt, hergestellt. Verfahrensschritte zur Herstellung der Erdung könnten beispielsweise wie folgt sein.
Zunächst wird die Leiterplatte befestigt und der Kontakt mit dem Montageblech 408 hergestellt. Der Kontakt mit der Leiterplatte 304 erfolgt an mindestens einem, hier zwei Punkten 402. Danach wird der elektrische Kontakt an der Leiterplatte 304 mit dem Montageblech 408 sichergestellt. Als nächstes wird das äußere Metallgehäuse des Gleichstrommotors 410 an das Montageblech 408 gepresst, um den Gleichstrommotor 410 zu befestigen. Im Anschluss wird die ausgehende mechanische Welle 202 bzw. die Antriebsrad-Wellenverbindungswelle 202 an der Schnittstelle mit der Schnittstellenwelle 206 durch eingepresste Hülsen im Montageblech 408 fixiert.

In Fig. 4b sind weiterhin das Wellenlager 406 und das Lager 412 der ausgehenden mechanischen Welle 202 sowie der Getriebesatz 404 mit Welle gezeigt.

Für eine elektrische Verbindung zwischen dem Fahrzeug-Mechaniksystem und dem Fahrzeug-GND müssen folgenden Bedingungen erfüllt sein: Die ausgehende mechanische Welle 202 muss aus elektrisch leitfähigem Material bestehen und die Leiterplatte 304 muss metallisierte Ringe 402 in der Kontaktfläche mit dem Montageblech 408 aufweisen, deren Anzahl in diesem Beispiel zwei ist, wobei generell das Minimum aber ein metallisierter Ring ist.

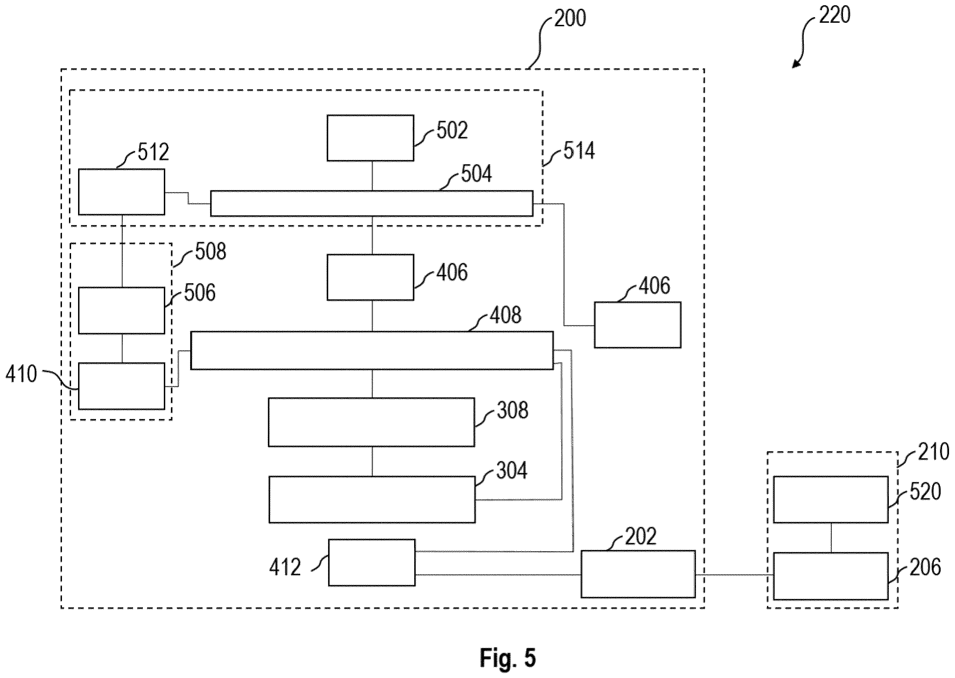

Fig. 5 zeigt ein Blockdiagramm mit einer funktionellen Darstellung der Komponenten der Anordnung 220 eines Fahrzeug-Mechaniksystems 200 und einem mit dem Fahrzeug-Mechaniksystem 200 verbundenen Anwendungssystem 210. Die eingezeichneten Linien stellen deren Erdungs-Verbindungspfade dar.

Im Block 508 befinden sich der Gleichstrommotor 410 und ein erstes Schneckengetriebe 506, das elektrisch mit dem Stirnradgetrieben 512, der Welle 504 und dem zweiten Schneckengetriebe 502 in Block 514 verbunden ist. Ein zentrales Element stellt das Montageblech 408 dar, das elektrisch mit der Welle 504, dem Gleichstrommotor 410, den Erdungsschrauben 308, der Leiterplatte 304, dem Wellenlager 406 sowie dem Antriebsradlager 412 für das Antriebsrad 202 bzw. der ausgehende Welle 202, die im eingebauten Zustand mit der Schnittstellenwelle 206 im Anwendungssystem 210 in Kontakt ist, verbunden ist. Die Fahrzeugmasse wird dann für alle direkt und indirekt verbundenen Komponenten durch den Block 520 im Anwendungssystem 210 bereitgestellt.

Wie Fig. 5 zeigt, sind in diesem Beispiel im Fahrzeug-Mechaniksystem 200 redundante Verbindungen vorhanden. Daher muss z.B. der Gleichstrommotor 410 nicht zwingend mit dem Montageblech 408 verbunden sein, sondern kann über den Pfad Schneckengetriebe 506, Stirnradgetriebe 512, Welle 504, Wellenlager 406, Montageblech 408, Antriebsradlager 412 und Antriebsrad bzw. Welle 202 verbunden werden.

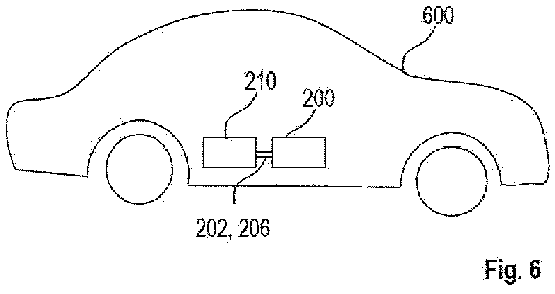

Fig. 6 zeigt schematisch ein Fahrzeug mit einem solchen Fahrzeug-Mechaniksystem 200 und einem Anwendungssystem 210.

Durch die Erfindung wird in vielen Fällen die Verwendung von Plastikgehäusen ermöglicht. Insbesondere im Falle von Mechanikantrieben oder an Getrieben angebrachten Antrieben können metallische Gehäuse durch Kunststoffgehäuse ersetzt werden, wodurch billigere Teile verwendet werden können, Steckverbinder in Gehäuse integriert werden können, was zur Reduzierung von Teilen und angrenzenden Teilen, die zum Abdichten und Befestigen von Verbindern an den traditionellen Metallgehäusen erforderlich sind, führt, sowie zur damit einhergehenden Prozessreduzierung. Weiterhin wird eine Verringerung der Produktgewichte erreicht.

## Patentansprüche

1. Fahrzeug-Mechaniksystem (200) aufweisend
bewegliche und unbewegliche mechanische Komponenten;
elektrische Komponenten, eingerichtet zum Bewegen der beweglichen mechanischen Komponenten;
ein Plastikgehäuse (302, 310), das die elektrischen Komponenten und die mechanischen Komponenten umschließt; wobei
eine der beweglichen Komponenten eine ausgehende Welle (202) ist, die aus dem Plastikgehäuse (302, 310) hervortritt; und wobei
die ausgehende Welle (202) eingerichtet ist, in mechanische Wechselwirkung mit einer Schnittstellenwelle (206) eines externen Anwendungssystems (210) zu treten und eine elektrische Verbindung mit dem Anwendungssystem (210) herzustellen.

2. Fahrzeug-Mechaniksystem (200) nach Anspruch 1, wobei die ausgehende Welle (202) eingerichtet ist, durch den elektrischen Kontakt eine Verbindung zur elektrischen Masse (520) des Fahrzeugs herzustellen.

3. Fahrzeug-Mechaniksystem (200) nach einem der vorhergehenden Ansprüche, wobei zumindest ein Teil der beweglichen mechanischen Komponenten metallisch und mit der ausgehenden Welle (202) verbunden ist.

4. Fahrzeug-Mechaniksystem (200) nach einem der vorhergehenden Ansprüche, wobei die ausgehende Welle (202) mit weiteren elektrischen Komponenten elektrisch verbunden ist.

5. Fahrzeug-Mechaniksystem (200) nach Anspruch 4, weiterhin aufweisend ein Montageblech (408), das dafür geeignet ist, dass elektrische und elektrisch leitende mechanische Komponenten daran befestigt werden können, wobei das Montageblech (408) elektrisch mit der ausgehenden Welle (202) verbunden ist.

6. Fahrzeug-Mechaniksystem (200) nach einem der vorhergehenden Ansprüche, wobei das Fahrzeug-Mechaniksystem (200) als mechanische Komponenten ein Schneckengetriebe (506, 502) und/oder ein Stirnradgetriebe (512) aufweist.

7. Fahrzeug-Mechaniksystem (200) nach einem der vorhergehenden Ansprüche, wobei die elektrisch leitenden, mechanischen Komponenten Wellenlager (406, 412) und/oder Schrauben (308) sind.

8. Fahrzeug-Mechaniksystem (200) nach einem der vorhergehenden Ansprüche, wobei die elektrischen Komponenten ein Gleichstrommotor (410) und / oder eine Leiterplatte (304) sind.

9. Fahrzeug-Mechaniksystem (200) nach einem der vorhergehenden Ansprüche, wobei elektrische und / oder mechanische Komponenten eine Kette bilden, über die sie mit dem Montageblech (408) elektrisch verbunden sind.

10. Fahrzeug-Mechaniksystem (200) nach einem der vorhergehenden Ansprüche, wobei das Fahrzeug-Mechaniksystem (200) ein Stellglied, ein Steuergerät, eine Betätigungseinheit oder ein Regler ist.

11. Verwendung eines Montageblechs (408) in einem Fahrzeug-Mechaniksystem (200) mit einem Plastikgehäuse (302, 310) zur Verbindung elektrischer und mechanischer Komponenten des Fahrzeug-Mechaniksystems (200) mit einer elektrischen Fahrzeugmasse (520).

12. Verwendung einer aus einem Gehäuse (302, 310) austretenden mechanischen Welle eines Fahrzeug-Mechaniksystems (200) zur Verbindung elektrischer und mechanischer Komponenten des Fahrzeug-Mechaniksystems (200) mit einer elektrischen Fahrzeugmasse (520).

13. Verbindungsanordnung (220), eingerichtet zum elektrischen Verbinden eines Fahrzeug-Mechaniksystems (200), das ein Plastikgehäuse (302, 310) nach einem der Ansprüche 1 bis 10 aufweist, mit einem Anwendungssystem (210), wobei
das Fahrzeug-Mechaniksystem (200) eine elektrisch leitende ausgehende mechanische Welle (202) aufweist;
das Anwendungssystem (210) eine elektrisch leitende Schnittstellenwelle (206) aufweist;
wobei die ausgehende mechanische Welle (202) des Fahrzeug-Mechaniksystems (200) und die Schnittstellenwelle (206) des Anwendungssystems (210) eingerichtet sind, mechanisch so miteinander verbunden zu werden, dass ein elektrischer Kontakt entsteht.

14. Fahrzeug, aufweisend ein Fahrzeug-Mechaniksystem (200) nach einem der Ansprüche 1 bis 10.
